# EUROPEAN PATENT SPECIFICATION

(11) **EP 0 912 464 B1**
(45) Date of publication and mention of the grant of the patent: **23.08.2000**
(21) Application number: 97927553.4
(22) Date of filing: 05.06.1997
(51) Int. Cl.: C05F 17/00, C05F 17/02

(54) **COMPOSTING MACHINE**
KOMPOSTIERUNGSVORRICHTUNG
MACHINE POUR COMPOST

(30) Priority: 07.06.1996 SE 9602258
(43) Date of publication of application: 06.05.1999
(73) Proprietor: Franzen, Bo, 75004 Paris (FR)
(72) Inventor: CEDERMARK, Mats, S-234 00 Lomma (SE)
(74) Representative: Ström, Tore
(86) International application number: SE9700992
(87) International publication number: WO9746499

(56) References cited:
- EP-A- 0 543 097
- EP-A- 0 588 160
- WO-A-95/20555
- FI-B- 94 859

## Description

### TECHNICAL FIELD

The invention relates to a composting machine, and a method for efficient decomposition of compostable waste in a composting machine.

### BACKGROUND OF THE INVENTION

The composting machines presently used for composting household waste are big, heavy and difficult to handle. A composting machine intended to serve about 50 households weighs some 700 kg, and measures about 2.5 m x 1 m x 1.5 m (LxWxH).

The operation of these composting machines is based on filling the whole compost vessel with compostable waste, which is then allowed to decay. After about three months, the compostable waste material has been converted to humus, which is then discharged from the vessel.

A major problem with these composting machines is that once the vessel has been filled with compostable material, new waste material cannot be added on an ongoing basis, since the material added most recently will not have decayed fully when the vessel is due to be emptied. In such a case, the overall efficiency of the decomposition process will be very low.

Another problem with today's composting machines is that when the compost vessel has been emptied, there will be no humus remaining, and the decomposition process must start anew when new compostable waste material is added.

Yet another drawback of the composting machines of the prior art is that there is insufficient mixing of the added organic components; pockets containing unmixed material will be formed.

Thus, an objective of the present invention is to provide a composting machine in which the decomposition process is continuous and which allows new organic waste to be added to the compost vessel continually, without causing the decomposition process to lose its efficiency.

Another objective of the invention is to provide a considerably smaller composting machine than machines of the prior art, with preserved composting capacity.

Yet another objective of the invention is to provide a composting machine where all functions of the vessel, the shredder, the fan and the mixer are computer controlled.

It is therefore also an objective of the invention to accomplish thorough mixing of the compost material, with consequent even levels of temperature, humidity and oxygenation throughout the decaying material. Areas (pockets) with low levels of oxygen or low temperatures (wall effects) will thus be eliminated in the machines according to the invention.

### BRIEF SUMMARY OF THE INVENTION

The objectives listed above will be achieved with a composting machine, with the characteristics presented in claim 1.

Further characteristics of the present invention are presented in the subclaims.

### BRIEF DESCRIPTION OF THE APPENDED DRAWINGS

Below will be given a detailed description of an embodiment of the invention, with reference to the appended drawings.
Figure 1 is a perspective view of the composting machine according to the invention;
figure 2 is a vertical section through the composting machine of figure 1;
figure 3 is a horizontal section through the composting machine of figure 1;
figure 4 is a schematic presentation of the basic functional principles of the composting machine according to the invention;
figure 5 is an enlargement of a part of the shaft with the flat irons extending through the composting machine of the invention;
figure 6 shows the inclination of the flat irons, as viewed in the direction of arrow A in figure 5;
figure 7 shows the preferred embodiment of the shaft of figure 2;
figure 8 shows a preferred embodiment with bevelled flat irons, as viewed towards the ends of the irons; and
figure 9 is a horizontal section through the composting machine, showing the nethermost mixing zone of figure 7.

### DETAILED DESCRIPTION OF AN EMBODIMENT OF THE INVENTION

Below, the design of the composting machine and its components will first be described. After that, the operating principles of the machine will be presented, as well as the different stages of decay that the composted material passes through as it progresses upwards in the machine.

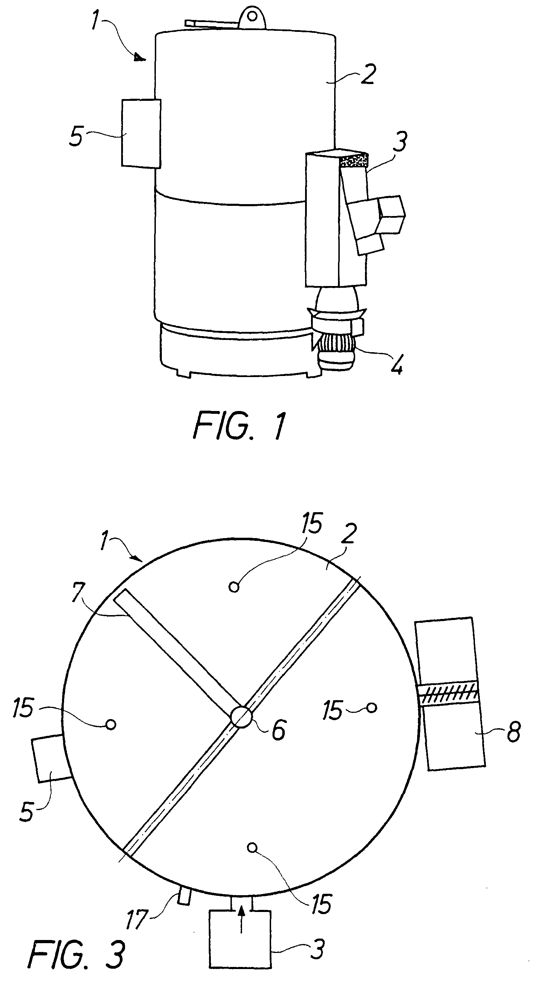

Figure 1 shows a prototype of the machine 1 according to the invention. The machine is preferably made of metal, plastics, or wood. The composting machine comprises a main vessel 2, a flap-covered receptacle 3, a shredder 4, a computerized controller 5 (PLC) and a fan (not shown). Figure 1 does not depict the container for finished humus, the discharge pipe, the condensate pipe or the drainage pipe.

Of course, any type of control system, such as a PLC, a time relay, etc., can be used with the present invention.

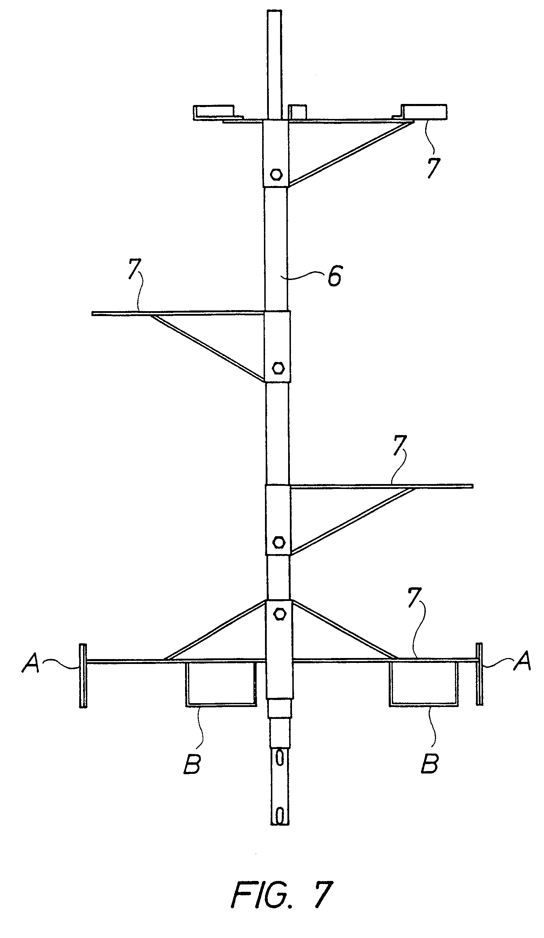

Note that in the embodiment according to figure 7, there is no drainage pipe, since all water collected is discharged through the upper part of the machine 1.

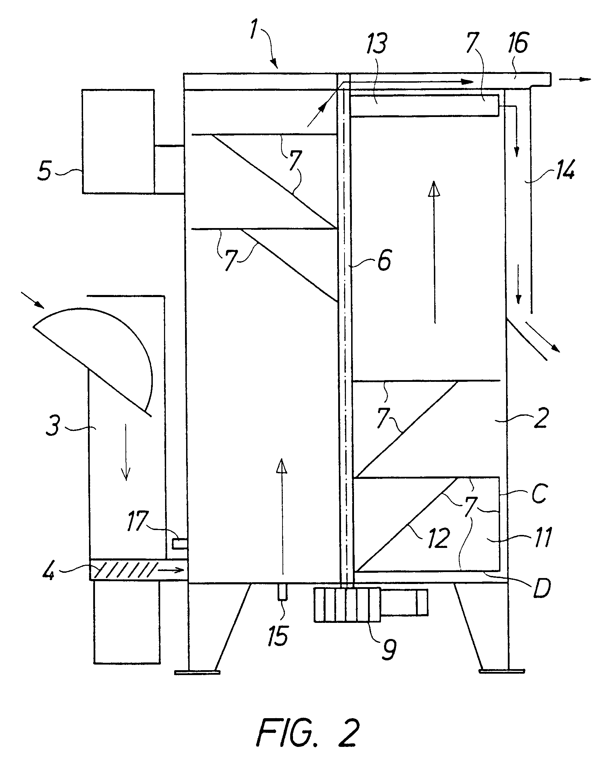

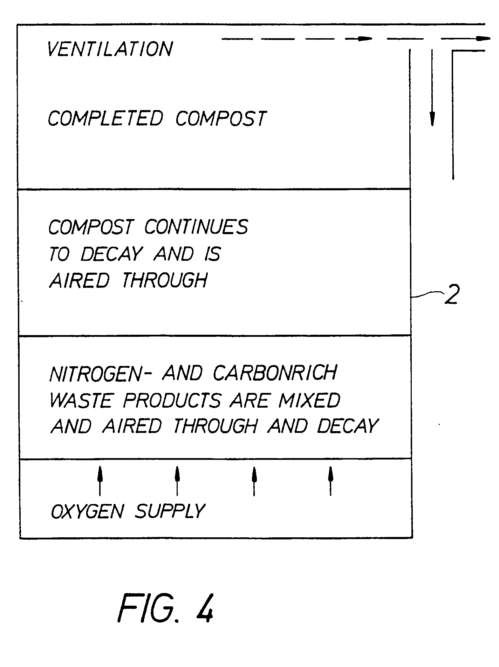

Figure 3, which is a horizontal section of the composting machine 1, indicates the circular shape of the compost vessel. Figure 3 also depicts the receptacle 3 for new waste, the PLC unit 5, the shaft 6 and the flat irons 7 (the mixer), plus a container 8 for finished humus. Figure 2 indicates how the rotatable shaft 6 extends through the entire compost vessel 2. Below the compost vessel, the shaft is attached to a drive 9, preferably a worm gear, turning the shaft at a speed of 2 - 6 rpm. As indicated on figure 2, the flat irons 7 are rigidly attached to the shaft 6 and hence rotate with the shaft.

The lowermost flat irons are welded together to form a rectangle 11, with a diagonal bar 12, and they function as mixing bars; they also perform a lifting function on the organic waste material. These bars mix the shredded waste material coming from the shredder, and presses this material slowly upwards in the vessel 2.

The flat irons 7 above the rectangle 11 mainly work by lifting the compost towards the top of the vessel. The irons 7 are slightly shorter than the radius of the vessel 2; preferably, they are about 0.5 m long. Their width is about 60 mm. The top bar 13, the so-called discharge blade, is attached to the shaft in such a way that its large surface, the 60 mm x 0.5 m area, presses against the compost material as the shaft 6 rotates. The purpose of this discharge blade is to expel finished humus through the discharge pipe 14.

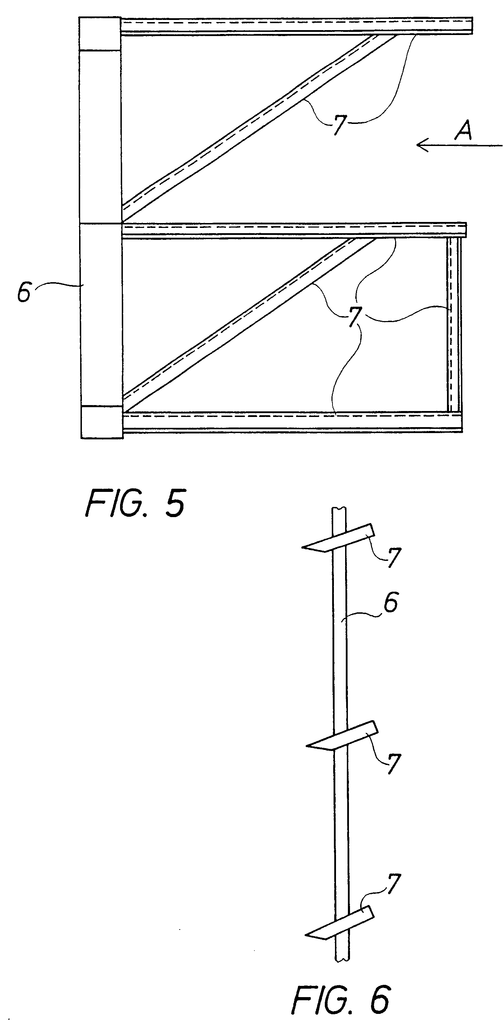

The other flat irons 7, 11, 12 are attached to the shaft 6 in such a way that the edge of each bar is pressed into the compost material as the shaft 6 rotates. These flat irons 7, 11, 12 are slightly inclined, as indicated in figures 5 and 6. Figure 6 shows the flat irons 7, which extend radially outwards from the shaft 6, in an end view, corresponding to arrow A in figure 5. This inclination of the flat irons give them a shovelling effect, lifting the compost material up towards the discharge pipe 14.

The lowermost rectangle 11 of flat irons 7 is mainly intended to pull the shredded waste material in from the shredder 4 towards the centre of the vessel 2, and to mix it. The main purpose of the discharge blade 13 is to expel the finished humus out into the discharge pipe 14, as mentioned above. The remaining flat irons are mainly intended to lift the compost material during the decay process, from the bottom of the vessel using the rectangle 11 of flat irons 7, up to the discharge blade 13, which presses the finished humus out through the discharge pipe 14, where the humus under the influence of gravity falls down into, for example, a container 8 (figure 3).

In the bottom of the vessel 2 four inlets 15 are provided for continuous supply of air. These inlets are evenly distributed about the shaft 6. In figure 2, only one inlet 15 is drawn; figure 3, however, shows the four inlets distributed around the shaft 6. In the side of the vessel 2, near its bottom, there is attached a drainage pipe 17, where leachate etc. is let out. In the upper part of the vessel 2, near the discharge pipe 14, there is attached a condensate pipe 16, through which condensate and any malodours are let out. To this end, there is mounted a fan (not shown), directly in connection with the condensate pipe. The fan continuously exhausts water vapour and malodours.

Compostable waste is entered into the receptacle 3, and is comminuted and pressed into the vessel 2 by the shredder 4. The shredder comprises knives, and is driven by a motor (not shown). Near the top of the vessel 2 there is mounted a computerized control unit 5 (PLC). This unit 5 controls the shredder, the worm gear 9, the shaft 6, the mixing bars 7, 11, 12, 13 and the fan. Specifically, the PLC unit 5 ensures that the worm gear is started concurrently with the shredder 4. The shredder 4 starts to operate when compost waste is entered into the receptacle 3, and runs for 1 - 10 minutes. This is ample time for comminuting the waste material and pressing it into the vessel 2, and for the mixer, i.e. the shaft 6 with the flat irons 7, to pull the material into the interior of the vessel 2 and mix it. The mixer will then run for about two minutes once every fifteen minutes or so, to mix, air and lift the compost material up towards the discharge pipe 13. Note that air is supplied continuously to the vessel 2, via the air inlets 15, so that enough oxygen is present to permit efficient composting.

Figure 4 shows generally a vertical section through the vessel, corresponding to figure 2. Figure 4 shows the vessel 2, containing organic compost in different stages of decay. At the bottom of the vessel, there is newly added compostable waste. Midway up through the vessel there is half-decayed material, and at the top of the vessel, there is completed compost or humus, ready to be discharged.

The basic principle of the invention is thus to add new compostable material at the bottom of the vessel 2, where it is mixed and aired through, and to let this material slowly rise through the vessel, lifted by the flat irons, under continued decay. New waste material, pressed into the vessel 2 by the shredder 4, will also help to press the material already present up towards the discharge blade 13. Note that the different layers of material in the vessel, corresponding to different stages of decay, are not mixed. Compostable material entered into the vessel 2 will not be mixed with material entered at an earlier time.

The higher in the vessel the compost passes, the further it will have decayed, and the compost at the top of the vessel has been converted to humus. Note that the compost is aired through during its entire passage up through the vessel, so that the decay process is efficient at all times. The decay process, from the time of addition of new compostable matter at the bottom of the vessel 2, to the time of discharge of finished humus from the top thereof, will last about 7 to 8 weeks.

The composting machine according to the invention hence allows both continual addition of fresh waste and continual withdrawal of finished humus. There is no need to wait, as with the composting machines of the prior art, for the whole batch of compost to finish decaying before adding new material. Further, about 95% of the volume of the vessel 2 can be used at all times, and the decay process does not have to be restarted, as in the composting machines according to the prior art, since decay goes on all the time. In other words, the composting machine 1 ensures efficient and effective decay of all added organic waste, since all of the material is slowly pressed upwards through the vessel in the same way, and hence is subjected to the same decay process.

In the following example, a more detailed presentation is given of the procedure of adding compostable material via the receptacle 3 into the vessel 2.

The compostable material will preferably consist of household organic refuse (food remains), which is high in nitrogen, plus carbon-rich material, such as newsprint and sawdust. For the decomposition to be efficient, the compost material should contain about 60% nitrogen and 40% carbon. The decomposition process in the vessel 2 is of course self-sustained, and basically comprises the reaction of nitrogen-rich with carbon-rich material in the presence of oxygen.

Once compostable waste material is put in the receptacle 3, the shredder 4 is activated and shreds the material and presses it into the vessel 2. The rotatable shaft 6 with the flat irons 7 pulls the material into the vessel 2 and mixes it thoroughly. Simultaneously, material already in the vessel is pushed upwards, partly as a result of the pressure exerted by the material being pressed in by the shredder, partly because of the shovelling effect of the flat irons 7. Air from a fan or a compressor (not shown) is injected continuously in the compost material through the four air inlets 15. During the decomposition process in the vessel, heat is generated and the temperature of the material rises to about 50 - 55°C. The water vapour then generated is removed through the condensate pipe 16. A fan (not shown), mounted next to the condensate pipe 16 and the discharge pipe 14, also helps to exhaust the water vapour. The composting machine is so dimensioned that the amount of air exhausted through the condensate pipe 16 or the condensate exit is greater than the amount of air entering the machine through the air inlets 15, which means that the humus at the top of the composting machine is kept entirely dry. The flow of air leaving through the condensate pipe/exit is controlled by a baffle or a speed regulated fan, so that the volume of air exhausted is larger than that entered through the inlets 15. It may be noted that the prior art composting machines do not provide dry humus. The fan also functions as a ventilation aid and removes obnoxious odours, in addition to keeping the humus at the top of the vessel 2 dry. The drainage pipe 17 near the bottom of the vessel ensures that leachate is let out. As mentioned above, the embodiment according to figure 7 does not include a drainage pipe.

Figure 7 shows a preferred embodiment of the shaft 6 and the flat irons 7. This shaft is essentially such that it can replace the shaft 6 of the embodiment according to figure 2. The flat irons A in figure 7 correspond to the flat irons C of figure 2. The flat irons B in figure 7 correspond to the irons D or the rectangle 11 of figure 2. The flat irons B of figure 7 mix incoming waste material very effectively. It may be noted that the two flat irons B are mounted at different distances from the corresponding flat irons A, which means that they mix different regions of the added waste material, the region close to the shaft 6 and the region close to the wall of the vessel, respectively.

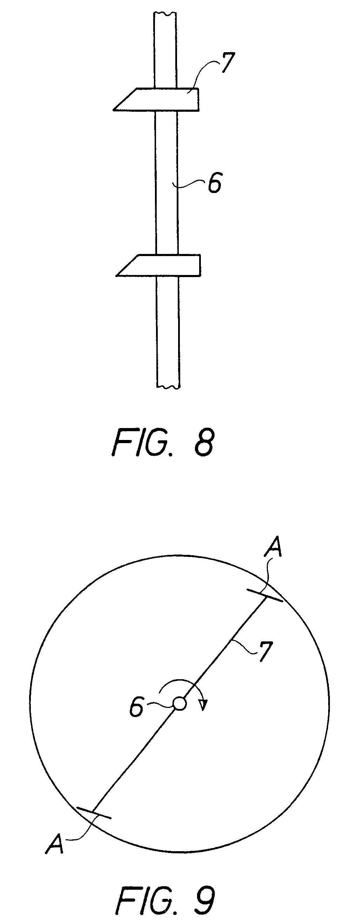

Figure 8 is an end view of the flat irons 7. Instead of being inclined, like the flat irons of figures 2 and 6, they are bevelled. The lifting action is a result of this bevelling.

Figure 9 is a horisontal section through the composting machine 1, where the shaft 6, the lowermost flat irons 7 and the flat irons A are depicted. Figure 9 clearly shows that the flat irons A form an angle with the wall of the machine, so that they pull in the material as the shaft 6 rotates. Obviously, it is not necessary that the flat irons described are actually made of iron. The important thing is that they are made of a rigid and stable material, and can be given a form such as that described. A plastic or composite material could for example be used instead of iron. The term "flat iron" also comprises structures of hard, rigid materials other than iron, such as hard plastics, composites, steel etc.

The composting machine according to the invention is intended to serve about 50 households. The machine 1 (see figure 1) is considerably smaller than the composting machines of the prior art, and weighs only about 300 kg. The composting machine according to the invention therefore requires much less room than the prior art composting machines. The composting machine according to figure 1 is about 2 m high and has a diameter of slightly more than one metre.

The structures and designs described are only intended as examples of preferred embodiments, and the scope of the invention is as defined by the appended claims.

## Claims

1. Composting machine for decomposition of compostable waste, comprising a vessel (2), a waste inlet (3) at the bottom of the vessel, means (4) for disintegrating waste supplied to the inlet, means (11) in the vessel for mixing waste supplied to the vessel through the inlet, an air intake (15) at the bottom of the vessel allowing air flow into the vessel in the lower region thereof, and an air outlet (16) at the top of the vessel,
**characterized by**
***(a)*** an agitator (6, 7) in the vessel (2), rotatable about a vertical axis to agitate and mix the waste supplied to the vessel during movement of the waste from the bottom of the vessel to the top thereof,
***(b)*** a discharge pipe (14) for decomposed waste at the top of the vessel, and
***(c)*** means providing a forced flow of air from the air intake through the vessel and the waste therein to the surroundings through the air outlet.

2. Composting machine as in claim 1, **characterized in** that the agitator comprises a rotatable shaft (6) in the centre of the vessel (2) extending over the full hight thereof, and blades (7) projecting radially from the shaft.

3. Composting machine as in claim 2, **characterized in** that a discharge blade (13) on the shaft (6) of the agitator is located near the discharge pipe (14) to expel decomposed waste therethrough.

4. Composting machine as in claim 2, **characterized in** that blades (7) on the shaft (6) of the agitator enclose an angle with the wall of the vessel (2) to draw waste supplied to the waste inlet (3) into the vessel.

5. Composting machine as in claim 2, **characterized in** that blades (7) on the shaft (6) of the agitator are skewed or bevelled to impose a lifting action on the waste in the vessel (2).

## Patentansprüche

1. Kompostierungsvorrichtung zur Zersetzung von kompostierbarem Abfall, umfassend ein Gefäß (2), einen Abfalleinlaß (3) am Boden des Gefäßes, Mittel (4) zum Zerlegen von dem Einlaß zugeführtem Abfall, Mittel (11) in dem Gefäß zum Mischen von dem Gefäß durch den Einlaß zugeführtem Abfall, eine Luftansaugvorrichtung (15) am Boden des Gefäßes, die einen Luftstrom in das Gefäß in dessen untere Region hinein ermöglicht, und einen Luftauslaß (16) im oberen Bereich des Gefäßes,
gekennzeichnet durch
(a) ein Rührwerk (6, 7) in dem Gefäß (2), das um eine vertikale Achse drehbar ist, um den dem Gefäß zugeführten Abfall während der Bewegung des Abfalls vom Boden des Gefäßes zu dessen oberem Bereich durchzurühren und zu mischen,
(b) ein Auswurfrohr (14) für zersetzten Abfall am oberen Bereich des Gefäßes, und
(c) Mittel zur Bereitstellung eines Gebläseluftstroms von der Luftansaugvorrichtung durch das Gefäß und den Abfall darin durch den Luftauslaß hindurch an die Außenumgebung.

2. Kompostierungsvorrichtung nach Anspruch 1, dadurch gekennzeichnet, daß das Rührwerk eine drehbare Welle (6) im Zentrum des Gefäßes (2) umfaßt, die sich über dessen gesamte Höhe erstreckt, und Blätter (7) umfaßt, die radial von der Welle abstehen.

3. Kompostierungsvorrichtung nach Anspruch 2, dadurch gekennzeichnet, daß ein Auswurfblatt (13) auf der Welle (6) des Rührwerks nahe an dem Auswurfrohr (14) angeordnet ist, um zersetzten Abfall dort hindurch auszustoßen.

4. Kompostierungsvorrichtung nach Anspruch 2, dadurch gekennzeichnet, daß Blätter (7) auf der Welle (6) des Rührwerks einen Winkel mit der Wand des Gefäßes (2) einschließen, um dem Abfalleinlaß (3) zugeführten Abfall in das Gefäß hineinzuziehen.

5. Kompostierungsvorrichtung nach Anspruch 2, dadurch gekennzeichnet, daß Blätter (7) auf der Welle (6) des Rührwerks gekippt oder abgeschrägt sind, um dem Abfall in dem Gefäß (2) eine Hubbewegung aufzuzwingen.

## Revendications

1. Machine de compostage pour la décomposition des déchets compostables, comprenant un récipient (2), une admission de déchets (3) à la base du récipient, des moyens (4) pour désagréger les déchets introduits dans l'admission, des moyens (11) dans le récipient pour mélanger les déchets introduits dans la cuve par l'admission, une entrée d'air (15) à la base de la cuve laissant circuler l'air dans le récipient dans la région inférieure de celui-ci, et une sortie d'air (16) en haut du récipient, caractérisée par
(a) un agitateur (6, 7) dans le récipient (2), tournant autour d'un axe vertical pour agiter et mélanger les déchets introduits dans le récipient pendant le mouvement des déchets depuis la base du récipient vers le haut de celui-ci,
(b) un tuyau d'évacuation (14) pour les déchets décomposés en haut du récipient, et
(c) des moyens délivrant un flux d'air forcé depuis l'entrée d'air traversant le récipient et les déchets qu'il contient vers l'extérieur par la sortie d'air.

2. Machine de compostage selon la revendication 1, caractérisée en ce que l'agitateur comprend un axe tournant (6) au centre du récipient (2) s'étendant sur toute la hauteur de ce dernier, et des lames (7) faisant radialement saillie depuis l'axe.

3. Machine de compostage selon la revendication 2, caractérisée en ce qu'une lame d'évacuation (13) sur l'axe (6) de l'agitateur est située près du tuyau d'évacuation (14) pour expulser les déchets décomposés à travers.

4. Machine de compostage selon la revendication 2, caractérisée en ce que les lames (7) sur l'axe (6) de l'agitateur forment un angle avec la paroi du récipient (2) pour amener les déchets introduits dans l'admission de déchets (3) dans le récipient.

5. Machine de compostage selon la revendication 2, caractérisée en ce que les lames (7) sur l'axe (6) de l'agitateur sont inclinées ou biseautées pour imposer une ascension aux déchets dans le récipient (2).
